# EUROPEAN PATENT APPLICATION

(11) **EP 4 726 380 A1**
(43) Date of publication of application: **15.04.2026**
(21) Application number: 24205856.8
(22) Date of filing: 10.10.2024
(51) Int. Cl.: G01N 23/223

(54) **A WINDOW ASSEMBLY FOR AN XRF ANALYZER INSTRUMENT**

(71) Applicant: Hitachi High-Tech Analytical Science Finland Oy, 02631 Espoo (FI)
(72) Inventor: KAIRUS, Jaakko, 09810 Nummi (FI)
(74) Representative: Berggren Oy

(57) **Abstract**

According to an embodiment, a measurement chamber assembly (100) for an X-ray fluorescence (XRF) analyzer instrument is provided, the measurement chamber assembly comprising: a measurement chamber (101) formed in a cavity provided in a casing of the XRF analyzer instrument, wherein the cavity is provided with a measurement aperture which allows for transferring primary radiation from the measurement chamber (101) towards the sample (130) positioned on exterior of the measurement chamber (101) and for transferring secondary radiation invoked in the sample (130) to the measurement chamber (101); a sample window assembly arranged to close the measurement aperture, wherein the sample window assembly comprises an electrically conductive layer; and a window circuit (110) arranged to supply an electric current through the electrically conductive layer and provide one or more electrical monitoring signals that are at least indirectly indicative of resistance of the electrically conductive layer.

## Description

### TECHNICAL FIELD

The present invention relates to X-ray fluorescence (XRF) analysis and, in particular, to a measurement chamber assembly for an XRF analyzer instrument and to an XRF analyzer instrument making use of the measurement chamber assembly.

### BACKGROUND

The XRF analysis is a technique that enables analysis of elemental composition of various materials, such as metals, glass, etc. The XRF analysis relies on energy spectrum of fluorescent (secondary) X-rays generated via exciting a sample under study using a high-energy (primary) X-rays: each element emits fluorescent X-rays exhibiting an energy spectrum that is characteristic to the respective element when subjected to the high-energy X-rays and, consequently, elemental composition of a sample may be determined via analysis of the energy spectrum of the fluorescent X-rays invoked by directing the high-energy X-rays to the sample.

Hence, an XRF analyzer instrument comprises an X-ray radiation source such as an X-ray tube for exciting a sample under study using the high-energy X-rays, a solid-state detector such as a silicon drift detector (SDD) for capturing the fluorescent X-rays invoked from the sample by the high-energy X-rays, and an analyzer entity for determining the elemental composition of the sample based on the energy spectrum of the fluorescent X-rays captured by the detector. In this regard, a radiation-emitting portion of the X-ray radiation source and a radiation-receiving surface of the detector are arranged in a closed space that may be referred to as a measurement chamber. The measurement chamber is provided with an aperture, which is closed by a sample window to prevent e.g. water, dust and small particles from entering the measurement chamber but that allows for the high-energy X-rays to exit the measurement chamber to excite a sample positioned immediately adjacent to the sample window and that allows the fluorescent X-rays invoked from the sample to enter the measurement chamber and meet the radiation-receiving surface of the detector therein. The analyzer entity may be communicatively coupled to the detector (e.g. via one or more electrical wires) and it is typically provided outside the measurement chamber.

Since the sample window must enable both the high-energy X-rays originating from the X-ray radiation source and the fluorescent X-rays invoked from the sample to pass therethrough, the sample window is necessarily relatively thin. Consequently, despite careful selection of the window material and/or any reinforcements applied in the window structure, the sample window is nevertheless susceptible to damage due to external impacts, due to excessive heat, due to wear and tear, etc. Since any damage to the sample window typically allows contamination such as water and dust to enter the measurement chamber, early detection of any damage of the sample window is important to ensure avoiding such contamination distorting measurements carried out by the XRF analyzer instrument or even causing damage to the radiation source and the detector.

### SUMMARY

It is an object of the present invention to provide a technique for automated detection of damage occurring to the sample window of an XRF analyzer instrument.

According to an embodiment, a measurement chamber assembly for an X-ray fluorescence (XRF) analyzer instrument is provided, the measurement chamber assembly comprising: a measurement chamber formed in a cavity provided in a casing of the XRF analyzer instrument, wherein the cavity is provided with a measurement aperture which allows for transferring primary radiation from the measurement chamber towards the sample positioned on exterior of the measurement chamber and for transferring secondary radiation invoked in the sample to the measurement chamber; a sample window assembly arranged to close the measurement aperture, wherein the sample window assembly comprises an electrically conductive layer; and a window circuit arranged to supply an electric current through the electrically conductive layer and provide one or more electrical monitoring signals that are at least indirectly indicative of resistance of the electrically conductive layer.

According to another embodiment, an X-ray fluorescence (XRF) analyzer instrument is provided, the XRF analyzer instrument comprising a measurement chamber assembly according to the embodiment described in the foregoing and a controller arranged to: receive the one or more electrical measurement signals from the window circuit, and detect damage of the sample window assembly based on a change in resistance of the conductive layer indicated by the one or more electrical monitoring signals.

According to another example, a method for monitoring integrity of a measurement chamber assembly of an X-ray fluorescence (XRF) analyzer instrument is provided, where the measurement chamber assembly comprises a measurement chamber formed in a cavity provided in a casing of the XRF analyzer instrument, wherein the cavity is provided with a measurement aperture which allows for transferring primary radiation from the measurement chamber towards the sample positioned on exterior of the measurement chamber and for transferring secondary radiation invoked in the sample to the measurement chamber, and a sample window assembly arranged to close the measurement aperture, wherein the sample window assembly comprises an electrically conductive layer, the method comprising: supplying an electric current through the electrically conductive layer; providing one or more electrical monitoring signals that are at least indirectly indicative of resistance of the electrically conductive layer; and detecting damage of the sample window assembly based on a change in resistance of the conductive layer indicated by the one or more electrical monitoring signals.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and to its operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 schematically illustrates some components of a measurement chamber assembly for an XRF analyzer instrument according to an example;
Figure 2 illustrates a block diagram of some components of an XRF analyzer instrument according to an example;
Figure 3 illustrates a window circuit according to an example;
Figure 4A illustrates a sample window assembly according to an example;
Figure 4B illustrates a sample window assembly according to an example;
Figure 5 illustrates a sample window assembly according to an example;
Figure 6 illustrates a flowchart that represents a method according to an example, and
Figure 7 illustrates a block diagram of some components of an apparatus according to an example.

### DESCRIPTION OF SOME EMBODIMENTS

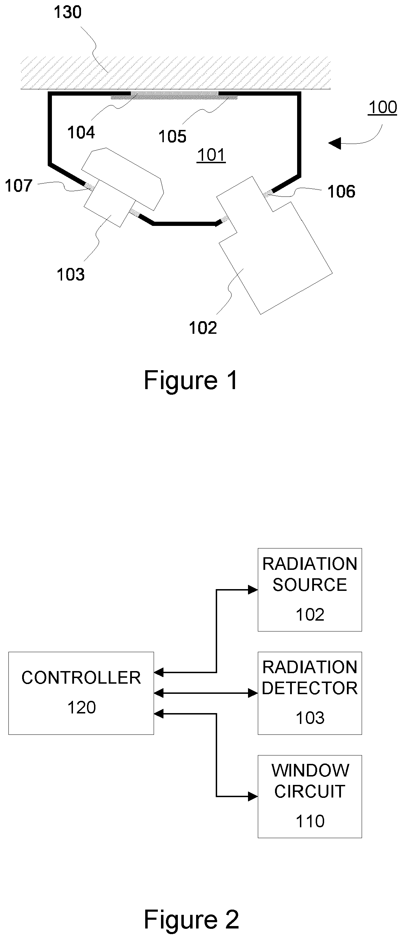

Figure 1 schematically illustrates a cross-section of a measurement chamber assembly 100 according to an example, whereas Figure 2 illustrates a block diagram of some components of an X-ray fluorescence (XRF) analyzer instrument according to an example. The illustration of Figure 1 further includes a sample 130, whereas the measurement chamber assembly 100 is applicable as a component of an X-ray fluorescence (XRF) analyzer instrument provided for determining an elemental composition of the sample 130 via an XRF analysis.

The measurement chamber assembly 100 comprises a measurement chamber 101 with a radiation source 102 for emitting primary radiation towards the sample 130 and a radiation detector 103 for detecting secondary radiation invoked from the sample 130 due to the primary radiation. Hence, the primary radiation serves as an excitation to invoke the secondary radiation from the sample 130. The radiation source 102 may comprise, for example, an X-ray tube for emitting high-energy X-rays, whereas the secondary radiation invoked by the primary radiation may comprise fluorescent X-rays. The detector 103 may comprise, for example, a solid-state detector such as a silicon drift detector (SDD). The detector 103 is arranged to provide an electrical measurement signal that is descriptive of intensity of radiation received at the radiation detector 103 and that enables deriving an energy spectrum of the received secondary radiation.

The measurement chamber 101 is formed in a cavity provided e.g. in a casing of the XRF analyzer instrument, where the cavity is provided with a measurement aperture, which allows for transferring the primary radiation from the measurement chamber 101 towards the sample 130 positioned on exterior of the measurement chamber 101 and for transferring secondary radiation invoked in the sample 130 to the measurement chamber 101. The measurement aperture is closed by a sample window assembly, the cavity and the sample window assembly thereby forming an enclosure that serves as the measurement chamber 101. The sample window assembly serves to close the measurement aperture such that it serves as protection against water, dust, dirt, etc. contamination that may be present in operating environment of the measurement chamber assembly 100 entering the measurement chamber 101. In some examples, the sample window assembly closes the measurement aperture in a non-air-tight manner, whereas in some examples the sample window assembly closes the measurement aperture in an air-tight manner, thereby enabling provision of the measurement chamber 101 as a hermetically sealed space that ensures keeping the conditions within the measurement chamber 101 unchanged over time.

The sample window assembly is transparent for both the primary radiation emitted from the radiation source 102 and for the secondary radiation invoked from the sample 130 and it comprises an electrically conductive layer that covers the measurement aperture substantially in its entirety. In the example shown in Figure 1, the sample window assembly comprises a sample window 104 arranged to close the measurement aperture and an electrically conductive guard layer 105 arranged to cover a surface of the sample window 104 substantially in its entirety. In this regard, the sample window 104 may be also referred to as a protective window or as a measurement window, whereas the present disclosure predominantly applies the term sample window. The guard layer 105 is provided on a surface of the sample window 104 that is facing the radiation source 102 and the radiation detector 103, the guard layer 105 thereby being positioned inside the measurement chamber 101. In other words, in this example, the guard layer 105 is provided on an inner surface of the sample window 104. The conductive guard layer 105 is coupled as part of an electric circuit referred to herein as a window circuit 110, where the guard layer 105 constitutes a resistor of the window circuit 110 and where a change in resistance caused by the guard layer 105 serves as an indication of damage having occurred to the guard layer 105. Various aspects related to the sample window 104, the guard layer 105 and the window circuit 110 are discussed in further detail in examples provided in the following.

The radiation source 102 is arranged with respect to the measurement chamber 101 such that at least its radiation-emitting portion is disposed inside the measurement chamber 101 such that the primary radiation emitted therefrom is directed towards the measurement aperture. Along similar lines, at least a radiation-receiving portion of the radiation detector 103 is arranged inside the measurement chamber 101 such that it is able to receive the secondary radiation via the measurement aperture. Hence, when carrying out an analysis of the sample 130 by the XRF analyzer instrument, the sample 130 is positioned outside the measurement chamber 101 as close as possible to the measurement aperture (e.g. against the sample window assembly) and, consequently, the primary radiation is directed to the sample 130 through the sample window assembly while the secondary radiation invoked from the sample 130 is directed to the radiation detector 103 likewise through the sample window assembly.

The schematic illustration of Figure 1 provides an example, where the radiation source 102 does not reside inside measurement chamber 101 in its entirety but it is sufficient to have the radiation-emitting portion of the radiation source 102 disposed inside the measurement chamber 101. Hence, in this example the measurement chamber 101 is provided with a radiation source aperture for fitting the radiation source 102 to the measurement chamber 101 such that its radiation-emitting portion is disposed within the measurement chamber 101, while part of the radiation source 102 remains outside the measurement chamber 101. In this regard, the radiation-emitting portion of the radiation source 102 may protrude into the measurement chamber 101 through the radiation source aperture via a source adapter 106 that preferably ensures a suitable sealing between the radiation source 102 and a wall of the measurement chamber 101.

Along similar lines, in the example of Figure 1 the radiation detector 103 does not reside inside measurement chamber 101 in its entirety but it is sufficient to have the radiation-receiving portion of the radiation detector 103 disposed inside the measurement chamber 101. Hence, in this example the measurement chamber 101 is provided with a radiation detector aperture for fitting the radiation detector 103 to the measurement chamber 101 such that its radiation-receiving portion is disposed within the measurement chamber 101, while part of the radiation detector 103 remains outside the measurement chamber 101. In this regard, the radiation-receiving portion of the radiation detector 103 may protrude into the measurement chamber 101 through the radiation detector aperture via a detector adapter 107 that preferably ensures a suitable sealing between the radiation detector 103 and the measurement chamber 101.

Respective characteristics of respective sealings for the radiation source 102 and for the radiation detector 103 may vary in accordance with characteristics and requirements of the measurement chamber 101 and/or those of the XRF analyzer instrument: in some examples the respective sealings provided for the radiation source 102 and for the radiation detector 103 may be e.g. dustproof and/or waterproof, whereas in some examples these sealings may be gas-tight. In further examples, the casing of the XRF instrument making use of the measurement chamber assembly 100 may provide sealing of suitable characteristics and, consequently, any further sealings between the radiation source 102 and the measurement chamber 101 and/or between the radiation detector 103 and the measurement chamber 101 may be unnecessary and hence omitted.

It is also worth noting that the arrangement of the radiation source 102 and the radiation detector 103 according to the example of Figure 1 is a non-limiting one, and in other examples the radiation source 102 and/or the radiation detector 103 may be arranged within the measurement chamber 101 substantially in their entirety. In such an arrangement, the radiation source aperture and/or the radiation detector aperture (as applicable) may be provided and dimensioned for routing electrical wiring applied for electrically coupling the radiation source 102 and/or the radiation detector 103 to one or more entities provided outside the measurement chamber 101.

As shown in the block diagram of Figure 2, the XRF analyzer instrument further comprises a controller 120 that is communicatively coupled to the radiation source 102, to the radiation detector 103 and to the window circuit 110. The controller 120 is arranged for controlling one or more aspects related to operation of the radiation source 102 and the radiation detector 103. As an example in this regard, the controller 120 may be arranged to carry out an analysis of elemental composition of the sample 130 via implementing e.g. the following actions:
- control the radiation source 102 to emit the primary radiation of predefined characteristics,
- read the measurement signal from the radiation detector 103,
- carry out the analysis of elemental composition of the sample 130 based at least in part on the measurement signal.

In this regard, the above aspects of using the radiation source 102 to emit the primary radiation towards the measurement aperture (and hence towards the sample 130) and reading the measurement signal generated by the radiation detector 103 based on the secondary radiation (invoked from the sample 130) may be considered as respective steps of a measurement procedure, which is followed by the analysis that is based at least in part on the energy spectrum of the measurement signal obtained via the measurement process.

The XRF analyzer instrument may comprise a user interface (UI) including a user input portion for receiving user input for controlling at least some aspects of operation of the XRF analyzer instrument and an output portion for displaying information pertaining to operation of the XRF analyzer instrument. The user input portion may comprise, for example, a touchscreen or a touchpad and/or one more keys, buttons, switches, knobs, etc. for receiving user commands for operating the XRF analyzer instrument, whereas the output portion may comprise, for example, an electronic display (e.g. a touchscreen or a conventional electronic display apparatus) for displaying information pertaining to results of the analysis of elemental composition carried out by the XRF analyzer instrument and/or to operational status of the XRF analyzer instrument. The controller 120 may be arranged to control one or more aspects related to operation of the measurement chamber assembly based at least in part on user input received via the UI of the XRF analyzer instrument. As a non-limiting example in this regard, the controller 120 may be arranged to carry out the measurement procedure followed by the analysis of elemental composition of the sample 130 described in the foregoing in response to receiving a respective user command via the UI of the XRF analyzer instrument.

The controller 120 is further arranged to receive, from the window circuit 110, one or more electrical monitoring signals that are at least indirectly (i.e. directly or indirectly) indicative of resistance of the electrically conductive layer (e.g. the guard layer 105) and detect damage of the electrically conductive layer based on the one or more monitoring signals. In particular, the controller 120 may be arranged to detect damage in the electrically conductive layer based on a change in resistance indicated by the one or more electrical monitoring signals, e.g. in response to the one or more monitoring signals indicating a change of predefined kind in resistance of the electrically conductive layer. In various examples, a change in resistance of the electrically conductive layer is considered in comparison to the resistance of undamaged electrically conductive layer, whereas a change in resistance is detected via a relative change and/or via an absolute change in resistance. In particular, the controller 120 may be arranged to detect damage in the electrically conductive layer in response to observing an absolute value of the change in resistance in relation to the resistance of undamaged electrically conductive layer exceeding a (first) predefined threshold value and/or in response to an absolute value of the change in resistance exceeding a (second) predefined threshold value. Moreover, the controller 120 may be arranged to consider such a change in resistance as an indication of damage in the sample window assembly, which implies a risk of water, dust, dirt, etc. from the operating environment of the XRF analyzer instrument entering the measurement chamber 101.

According to an example, the controller 120 responds to detecting damage in the sample window assembly by providing an indication of detected damage via the UI of the XRF analyzer instruments (e.g. by controlling the electronic display apparatus provided in the III of the XRF analyzer instrument to display an indication of damage having occurred in the sample window assembly, whereas in another example the controller 120 responds to detecting damage of the sample window assembly by transmitting, to another apparatus, a message indicating the detected damage.

Along the lines described in the foregoing, the XRF analyzer instrument making use of the measurement chamber assembly 100 is useable for determining an elemental composition of the sample 130. In particular, the XRF analyzer instrument may be applicable for determining elemental composition of samples including materials such as metals, glass, oil, soil, plastic, cement, etc. The measurement chamber assembly 100 according to the present disclosure is useable in XRF analyzer instruments of different types, e.g. in a handheld or otherwise portable XRF analyzer instruments, in a desktop / benchtop XRF analyzer instruments, or in an in-line XRF analyzer instruments: in a handheld XRF analyzer instrument the measurement chamber assembly 100 may be provided in a front end of the instrument such that the measurement aperture can be brought into contact with or into close proximity of the sample 130 when analyzing the sample 130, whereas in a benchtop XRF analyzer instrument and in an in-line XRF analyzer instrument the measurement chamber assembly 100 may be arranged such that, depending on the design of the XRF analyzer instrument, the sample 130 may be brought into contact with or into close proximity of the measurement aperture, e.g. such that the sample 130 is placed on top of the measurement aperture or under the measurement aperture when carrying out the analysis of the sample 130.

Referring now back to characteristics of the sample window assembly illustrated as part of the measurement chamber assembly 100 according to the example of Figure 1 that comprises the sample window 104 and the guard layer 105, the sample window 104 is typically provided as film or foil having a thickness, for example, in a range from 500 nanometers to 50 micrometers, whereas the most typical thicknesses are in a range from 1 to 25 micrometers. The sample window 104 needs to be thick enough to withstand some pressure, heat and impacts due to contact with external objects, whereas the sample window 104 needs to be thin enough to ensure transmitting both the primary radiation originating from the radiation source 102 and the secondary radiation invoked from the sample 130 therethrough without undue attenuation. Hence, an applicable thickness depends on the material of the film or foil serving as the sample window 104.

The material of the sample window 104 must be able to withstand the primary radiation at radiation levels applied by the XRF analyzer instrument making use of the measurement chamber assembly 100. Another requirement for the material of the sample window 104 is (substantial) absence of elements to be measured by the analyzer instrument making use of the XRF measurement chamber assembly: if the material of the sample window 104 comprises a non-negligible amount of such an element, it results in 'spectrum contamination' in the sense that the respective element is always visible in the measurement signal derived by the radiation detector 103 and, consequently, it typically degrades the measurement performance in terms of accurately measuring relatively small amounts of the respective element in the sample 130. In general, different plastics and carbon-based materials are suitable for the sample window 104, since these materials consist of elements of relatively low atomic mass that are typically non-detectable via the XRF analysis anyway. Non-limiting examples of materials suitable for the sample window 104 include polymers such as polypropylene (PP), polyethylene terephthalate (PET), polyimide (PI) and polycarbonate (PC)

In some examples, the XRF analyzer instrument may comprise a camera arranged to capture one or more images of the sample 130 through the sample window assembly during the measurement process, where the one or more images may be applicable e.g. for assisting correct alignment of the primary radiation on a surface of the sample 130, for storage as additional measurement data to enable subsequent tracking of the measurement, for assisting the analysis procedure carried out by the controller 120 and/or for monitoring reliability of the analysis. In such examples that make use of the camera, an additional requirement for the material and/or for the thickness of the sample window 104 is that sample window 104 must be transparent to wavelengths considered by the camera, which typically include the wavelengths of visible light approximately in a range from 370 to 700 nanometers.

As described in the foregoing, the guard layer 105 serving as the conductive layer of the sample window assembly according to the example of Figure 1 is a conductive layer that it is arranged to cover a surface of the sample window 104 substantially in its entirety and that serves as a resistor of the window circuit 110. In various examples, the thickness of the guard layer 105 is in a range from a few nanometers to a few hundred nanometers, depending on the material applied for constructing the guard layer 105. In this regard, despite its conductivity, the thinness of the guard layer 105 makes it serve as a resistor of the window circuit 110. A suitable thickness for the guard layer 105 is chosen in view of the overall design of the measurement chamber assembly 100: the guard layer 105 needs to be thick enough for durability but also thin enough to ensure transmitting both the primary radiation originating from the radiation source 102 and the secondary radiation invoked from the sample 130 therethrough without undue attenuation, whereas an applicable thickness for the guard layer 105 also depends on the material applied to form the guard layer 105. Nevertheless, in a typical implementation the guard layer 105 is substantially thinner than the sample window 104. In case the XRF analyzer instrument employs the camera for capturing images of the sample 130 through the sample window assembly, an additional requirement for the material and/or thickness of the guard layer 105 is transparency to the wavelengths of light considered by the camera.

Apart from electrical conductivity, the requirements for the material of the guard layer 105 are similar to those described above for the material of the sample window 104: the guard layer 105 is preferably made of material that is able to transmit the primary and secondary radiation without undue attenuation (in thickness chosen for the guard layer 105) and that does not include any elements to be measured by the analyzer instrument making use of the XRF measurement chamber assembly to any significant extent to avoid compromising accuracy of the measurement at relatively low concentrations of such elements in the sample 130 due to the `spectrum contamination'.

In a non-limiting example, the guard layer 105 is provided as a carbon nanotube (CNT) layer, where the thickness of the CNT layer may be chosen from a range from 50 to 250 nanometers, e.g. 100 nanometers. CNT layers of such thickness may be prepared via application of a suitable deposition technique known in the art. In addition to being inherently conductive, the CNT layer at such thickness range transmits both the primary radiation and the secondary radiation therethrough substantially unaffected while it is also transparent to wavelengths of visible light to a sufficient extent (e.g. in a range from 80 to 95 %). In another example, the guard layer 105 is provided as a graphene layer having a thickness chosen from a range from 50 to 250 nanometers, e.g. 100 nanometers, which has advantageous characteristic similar to those described above for the CNT layer. It is worth noting, however, that CNT and graphene serve as non-limiting examples of a material suitable for providing the guard layer 105 and in other examples a further conductive material that is substantially transparent to the primary and secondary radiations and to wavelengths considered by the camera (if applicable) may be applied instead.

As described in the foregoing, the electrically conductive layer of the sample window assembly, e.g. the guard layer 105, serves as a resistor of the window circuit 110. In this regard, the window circuit 110 is arranged to supply an electric current of predefined characteristics through the electrically conductive layer and supply the one or more monitoring signals as ones that are directly or indirectly (i.e. at least indirectly) indicative of the resistance of the electrically conductive layer. While the skilled person readily understands that a circuit of such characteristics may be embodied in many different ways, in a non-limiting example the window circuit 110 comprises the electrically conductive layer connected in series with a resistor with the window circuit 110, which is arranged to supply the electric current through this series-connection and supply a voltage between electrically conductive layer and the resistor as an electrical monitoring signal that is (indirectly) indicative of the resistance of the electrically conductive layer.

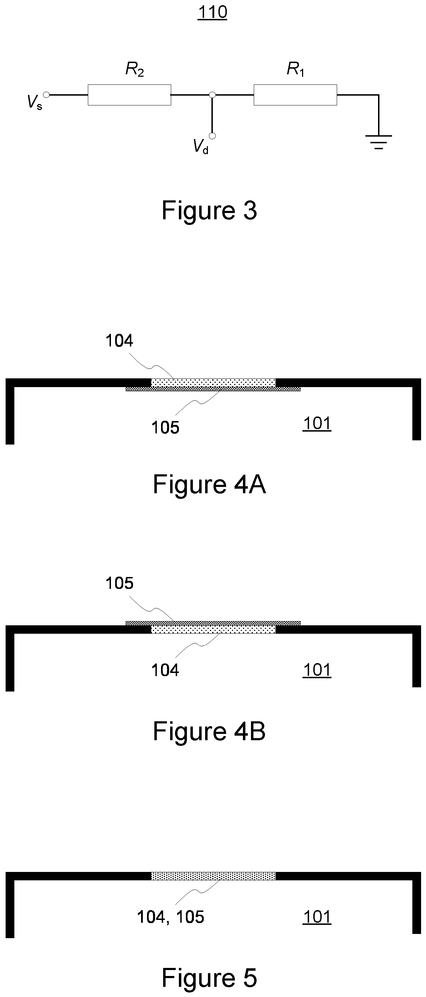

A particular example in this regard is illustrated in Figure 3, where the window circuit 110 includes a voltage source *V*ₛ and an arrangement of resistors *R*₁ and *R*₂ connected in series coupled between the voltage source *V*ₛ and a ground potential, where the electrically conductive layer of the sample window assembly serves as the resistor *R*₁ and where the resistor *R*₂ has a predefined fixed resistance. In such an implementation of the window circuit 110, the resistors *R*₁ and *R*₂ form a voltage divider, whereas a voltage *V*_{d} between the resistors *R*₁ and *R*₂ may be supplied as the electrical monitoring signal that is (indirectly) indicative of a ratio between respective resistances of the resistors *R*₁ and *R*₂ for reception by the controller 120. Herein, any change in resistance of the resistor *R*₁ (i.e. the electrically conducting layer) in relation to the resistance of the resistor *R*₂ results in a corresponding change in the voltage *V*_{d}.

In consideration of the approach depicted in Figure 1 that involves the guard layer 105 as the electrically conductive layer of the sample window assembly, the resistance arising from the guard layer 105 depends on its design, e.g. on conduction characteristics of the material of the guard layer 105, on the thickness of the guard layer 105, and on the shape of the guard layer 105, whereas the voltage applied to generate the electric current through guard layer 105 may be chosen accordingly to generate an electric current of desired magnitude. In non-limiting examples, the resistance of the (undamaged) guard layer 105 may be a value in a range from 300 Ω to 10 kΩ, whereas the applied voltage may be chosen such, that an electric current in a range from 0.1 to 1 milliamperes through the (undamaged) guard layer 105 is provided.

The (other) electrical components of the window circuit 110 and the electrical wires applied to connect the components of the window circuit 110 to each other are preferably provided within the measurement chamber 101. The guard layer 105 may have an area that extends also beyond the measurement aperture, whereas the portion of the guard layer 105 extending beyond the measurement aperture may be provided with contact pads or contact points for attaching the electrical wires that connect the guard layer 105 to other components of the window circuit 110.

The window circuit 110 operates under control of the controller 120. As an example in this regard, the controller 120 controls the window circuit 110 to continuously supply the electric current through the conductive layer of the sample window assembly, thereby enabling detection of possible damage in the sample window assembly without a delay. In another example, the controller 120 controls the window circuit 110 to supply the electric current through the conductive layer of the sample window assembly according to a predefined schedule, e.g. such that the electric current is supplied for predefined time periods at predefined time intervals. Such intermittent provision of the electric current provides an energy-efficient operation of the window circuit 110, which still enables timely detection of possible damage in the sample window assembly with a suitable design of said schedule.

Referring back to the sample window assembly, Figure 4A provides an enlarged schematic illustration regarding positioning of the guard layer 105 in relation to the sample window 104 in the sample window assembly of the exemplifying measurement chamber assembly 100 of Figure 1. As described above, in this example, the guard layer 105 is provided on the inner surface of the sample window 104 and it is hence positioned inside the measurement chamber 101. Arranging the guard layer 105 on the inner surface of the sample window 104 has an advantage of avoiding false alarms, since any resistance-changing damage to the guard layer 105 due to external impacts occurs only in scenarios where the damage is serious enough to reach through the sample window 104 also to the guard layer 105. Another advantage arising from arranging the guard layer 105 on the inner surface of the sample window 104 is that the resistance of the guard layer 105 does not gradually change due to wear and tear occurring in the course of operation of the XRF analyzer instrument, which is also an aspect that reduces the risk of false alarms. A further advantage of positioning the guard layer on the inner surface of the sample window 104 is simplified electrical connections between the guard layer 105 and other components of the window circuit 110 that is typically provided within the measurement chamber 101, since providing the guard layer 105 inside the measurement chamber 101 does not require making electrical connections through a wall of the measurement chamber 101.

Figure 4B illustrates the sample window assembly according to another example, where the guard layer 105 is provided on the outer surface of the sample window 104, i.e. on the surface that is intended for facing the sample 130, and hence in this example the guard layer 105 is positioned outside the measurement chamber 101. Also in this example, the other components of the window circuit 110 are preferably provided inside the measurement chamber 101. An advantage arising from arrangement of the guard layer 105 on the outer surface of the sample window 104 is that this structure also enables detecting partial damage to the sample window assembly but that does not extend all the way through the sample window 104. While in this example a change of resistance of the guard layer 105 also occurs when the damage does not extend all the way through the guard layer 105 and reach the sample window 104, it is nevertheless highly likely that any damage of the relatively thin guard layer 105 also implies damage of the sample window 104. Moreover, the extent of observed change in the resistance of the guard layer 105 increases with increasing damage occurring to the guard layer 105, the extent of change in resistance thereby serving as a measure that enables distinguishing scenarios where the damage likely only concerns the guard layer 105 from those where the damage likely also extends to the sample window 104.

In the examples described in the foregoing, the guard layer 105 that serves as an example of the electrically conductive layer of the sample window assembly is, implicitly, a substantially uniform (i.e. continuous) layer arranged on the surface of the sample window 104, whereas the guard layer 105 preferably covers the measurement aperture substantially in its entirety. In another example, the guard layer 105 may comprise an array of electrically conductive tracks or electrically conductive wires that extend over the measurement aperture. The tracks or wires may be embedded within a non-conductive material to provide a substantially continuous (non-uniform) layer, or they may be provided as a 'sparse' structure with openings between the tracks or wires. In such an example, the thickness of the conductive layer, the width (or thickness) of the conductive tracks or wires therein, and the spacing of the tracks or wires is chosen in view of conduction characteristics of the material applied to implement the tracks or wires to provide a resistance within a desired range. In a further example, the guard layer 105 may comprise a planar electrically conductive grid or mesh that extends over the measurement aperture, whereas the grid or mesh preferably covers the measurement aperture substantially in its entirety. In such an example, the thickness of the layer formed by the grid or mesh and the design of the grid or mesh structure are chosen in view of conduction characteristics of the material applied to implement the grid or mesh to provide a resistance within a desired range.

The examples described in the foregoing rely on applying respective separate physical components to provide the sample window 104 and the conductive guard layer 105, which enables substantial freedom in designing the guard layer 105 such that it provides suitable conductivity / resistance while ensuring transparency to the primary and secondary radiation and transparency to wavelengths considered by the camera (if applicable). Figure 5 schematically illustrates the sample window assembly according to a further example, where the sample window assembly is provided as a single structural element that provides the respective functions described in the foregoing for the sample window 104 and for the conductive guard layer 105.

In an example in the framework of Figure 5, the sample window 104 is arranged to also serve as the conductive layer that provides the function described in the foregoing for the guard layer 105 and, consequently, a separate conductive layer on the surface of the sample window 104 is not required. In such an example, the sample window 104 is made of a conductive material that provides suitable resistance when provided at a thickness that ensures sufficient rigidity and/or mechanical strength while also allowing transmission of the primary and secondary radiation therethrough without undue attenuation. While this example is applicable for simplifying the structure of the measurement chamber assembly 100 via dispensing with a separate guard layer, this approach typically requires finding a suitable tradeoff between factors such as sufficient mechanical strength, sufficient transparency to the primary and secondary radiation, and suitable conductivity / resistance of the sample window 104. Examples of materials suitable for providing the sample window 104 that also serves as the guard layer 105 include Polyaniline (PANI), Poly(3,4-ethylenedioxythiophene) (PEDOT) and carbon-doped plastics such as carbon-doped PP. In this regard, PEDOT includes a small (but non-negligible) amount of sulfur and hence involves 'spectrum contamination' with respect to sulfur, whereas carbon-doped plastics are typically not transparent to wavelengths of visible light and hence are not compatible with XRF analyzer instruments that make use of the camera for capturing images of the sample 130 through the measurement aperture. In respective variations of this example, the sample window 104 may be provided with conductive tracks or wires or the sample window 104 may comprise a grid or a mesh according to respective examples described in the foregoing, *mutatis mutandis.*

In another example in the framework of Figure 5, the guard layer 105 also serves as the sample window 104 and, consequently, a separate sample window is not required. In such an example, the guard layer 105 is made of material and provided in thickness that provides sufficient mechanical strength to make the guard layer 105 also serve as the sample window 104. Moreover, in such an example the guard layer 105 is provided as a continuous layer that covers the measurement aperture substantially entirety to ensure closing the measurement aperture. Advantages and disadvantages of this example are similar to those discussed above for the other example within the framework of Figure 5, i.e. this approach enables simplifying the structure of the measurement chamber assembly 100 via dispensing with a separate sample window, while this approach typically requires finding a suitable tradeoff between factors such as sufficient mechanical strength, sufficient transparency to the primary and secondary radiation, radiation endurance, avoidance of 'spectrum contamination', and suitable conductivity / resistance of the guard layer 105. Examples of materials suitable for providing the guard layer 105 that also serves as the sample window include carbon nanotubes and graphene at a layer thickness that is substantially higher than that applied in the exemplifying sample window assembly according to the example of Figures 1 and 4A.

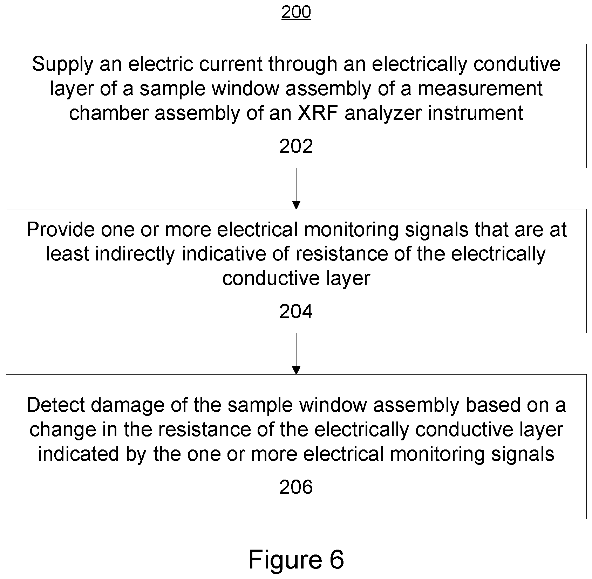

Some aspects of the above-described technique for detecting possible damage in the sample window assembly of the measurement chamber assembly 100 in the course of operation of the XRF analyzer instrument may be also described as steps of a method. As an example in this regard, Figure 6 depicts a flowchart that represents a method 200 for monitoring integrity of the measurement chamber assembly 100, the method 200 comprising the following steps:
- supplying the electric current through the electrically conductive layer of the sample window assembly (block 202);
- providing the one or more electrical monitoring signals that are at least indirectly indicative of the resistance of the electrically conductive layer (block 204); and
- detecting damage of the sample window assembly based on a change in the resistance of the electrically conductive layer indicated by the one or more electrical monitoring signals (block 206).

The respective operations described with references to blocks 202 to 206 pertaining to the method 200 may be varied or complemented in a number of ways, for example as described in the foregoing and/or in the following with references to the respective characteristics and/or operation of the XRF analyzer instrument and/or the measurement chamber assembly 100 therein.

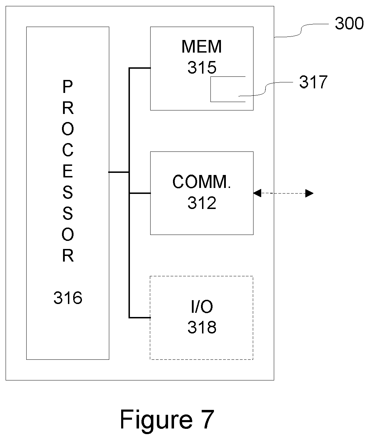

Figure 7 illustrates a block diagram of some components of an exemplifying apparatus 300. The apparatus 300 may comprise further components, elements or portions that are not depicted in Figure 7. The apparatus 300 may be referred to as a computing apparatus or as a computer apparatus and it may be employed e.g. in implementing at least some of the operations, procedures and/or functions described in the foregoing in context of the controller 120. The apparatus 300 comprises a processor 316 and a memory 315 for storing data and computer program code 317. The memory 315 and a portion of the computer program code 317 stored therein may be further arranged to, with the processor 316, to implement at least some of the operations, procedures and/or functions described in the foregoing in context of the controller 120.

The apparatus 300 may comprise a communication portion 312 for communication with other devices. The communication portion 312 comprises at least one communication apparatus that enables wired or wireless communication with other apparatuses. A communication apparatus of the communication portion 312 may also be referred to as a respective communication means. The apparatus 300 may, optionally, further comprise one or more user I/O (input/output) components 318 that may be arranged, possibly together with the processor 316 and a portion of the computer program code 317, to provide the UI of the XRF analyzer instrument. The processor 316 may be arranged to control operation of the apparatus 300 e.g. in accordance with a portion of the computer program code 317 and possibly further in accordance with the user input received via the user I/O components 318 and/or in accordance with information received via the communication portion 312.

Although the processor 316 is depicted as a single component, it may be implemented as one or more separate processing components. Similarly, although the memory 315 is depicted as a single component, it may be implemented as one or more separate components, some or all of which may be integrated/removable and/or may provide permanent / semi-permanent/ dynamic/cached storage.

The computer program code 317 stored in the memory 315, may comprise computer-executable instructions that control one or more aspects of operation of the apparatus 300 when loaded into the processor 316. As an example, the computer-executable instructions may be provided as one or more sequences of one or more instructions. The processor 316 is able to load and execute the computer program code 317 by reading the one or more sequences of one or more instructions included therein from the memory 315. The one or more sequences of one or more instructions may be configured to, when executed by the processor 316, cause the apparatus 300 to carry out at least some of the operations, procedures and/or functions described in the foregoing in context of the controller 120.

Hence, the apparatus 300 may comprise at least one processor 316 and at least one memory 315 including the computer program code 317 for one or more programs, the at least one memory 315 and the computer program code 317 configured to, with the at least one processor 316, cause the apparatus 300 to perform at least some of the operations, procedures and/or functions described in the foregoing in context of the controller 120.

The computer programs stored in the memory 315 may be provided e.g. as a respective computer program product comprising at least one computer-readable non-transitory medium having the computer program code 317 stored thereon, the computer program code, when executed by the apparatus 300, causes the apparatus 300 at least to perform at least some of the operations, procedures and/or functions described in the foregoing in context of the controller 120. The computer-readable non-transitory medium may comprise a memory device or a record medium that tangibly embodies the computer program. As another example, the computer program may be provided as a signal configured to reliably transfer the computer program.

References to a processor herein should not be understood to encompass only programmable processors, but also dedicated circuits such as field-programmable gate arrays (FPGA), application specific circuits (ASIC), signal processors, etc.

## Claims

1. A measurement chamber assembly (100) for an X-ray fluorescence, XRF, analyzer instrument that is applicable for analysis of elemental composition of a sample (130), the measurement chamber assembly (100) comprising:
a measurement chamber (101) formed in a cavity provided in a casing of the XRF analyzer instrument, wherein the cavity is provided with a measurement aperture which allows for transferring primary radiation from the measurement chamber (101) towards the sample (130) positioned on exterior of the measurement chamber (101) and for transferring secondary radiation invoked in the sample (130) to the measurement chamber (101);
a sample window assembly arranged to close the measurement aperture,
wherein the sample window assembly comprises an electrically conductive layer; and
a window circuit (110) arranged to supply an electric current through the electrically conductive layer and provide one or more electrical monitoring signals that are at least indirectly indicative of resistance of the electrically conductive layer.

2. A measurement chamber assembly (100) according to claim 1, wherein the sample window assembly comprises a sample window (104) arranged to close the measurement aperture and an electrically conductive guard layer (105) arranged on a surface of the sample window (104).

3. A measurement chamber assembly (100) according to claim 2, wherein the guard layer (105) is provided on a surface of the sample window (104) that is facing the radiation source (102) and the radiation detector (103).

4. A measurement chamber assembly (100) according to claim 2, wherein the guard layer (105) is provided on a surface of the sample window (104) that is intended for facing the sample (130).

5. A measurement chamber assembly (100) according to any of claims 2 to 4, wherein the guard layer (105) comprises one of the following:
a substantially uniform layer made of conductive material that covers the measurement aperture substantially in its entirety,
an array of electrically conductive tracks or wires that extend over the measurement aperture,
a planar electrically conductive mesh or grid that extends over the measurement aperture.

6. A measurement chamber assembly (100) according to any of claims 2 to 4, wherein the guard layer (105) comprises a substantially uniform layer made of one of the following:
carbon nanotubes,
graphene.

7. A measurement chamber assembly (100) according to claim 6, wherein a thickness of the guard layer (105) is in a range from 50 to 250 nanometers.

8. A measurement chamber assembly (100) according to claim 1, wherein one of the following applies:
the sample window assembly comprises a sample window (104) arranged to close the measurement aperture and wherein the sample window (104) comprises electrically conductive material;
the sample window assembly comprises an electrically conductive guard layer (105) that is arranged to close the measurement aperture.

9. A measurement chamber assembly (100) according to any of claims 1 to 8, wherein at least part of the window circuit (110) is provided inside the measurement chamber (101).

10. A measurement chamber assembly (100) according to any of claims 1 to 9, wherein
the window circuit (110) comprises the electrically conductive layer connected in series with a resistor,
the window circuit (110) is arranged to supply the electric current through the arrangement of the electrically conductive layer and the resistor, and the electrical monitoring signal comprises a voltage between the electrically conductive layer and the resistor.

11. A measurement chamber assembly (100) according to any of claims 1 to 10, further comprising:
a radiation source (102) having its radiation-emitting portion disposed inside the measurement chamber (101) and arranged to emit the primary radiation towards the measurement aperture so as to invoke the secondary radiation from the sample (130) positioned adjacent to the measurement aperture on the exterior of the measurement chamber (101); and
a radiation detector (103) having its radiation-receiving portion disposed inside the measurement chamber (101) and arranged to receive the secondary radiation via the measurement aperture and to provide an electrical measurement signal that is descriptive of intensity of the received radiation.

12. An X-ray fluorescence, XRF, analyzer instrument for analysis of elemental composition of a sample (130), the XRF analyzer instrument comprising:
a measurement chamber assembly (100) according to any of claims 1 to 11; and
a controller (120) arranged to:
receive the one or more electrical measurement signals from the window circuit (110), and
detect damage of the sample window assembly based on a change in resistance of the conductive layer indicated by the one or more electrical monitoring signals.

13. An XRF analyzer instrument according to claim 12, wherein the controller (120) is arranged to detect damage of the sample window assembly in response to the one or more electrical monitoring signals indicating a change of predefined kind in the resistance of the conductive layer.

14. An XRF analyzer instrument according to claim 12 or 13, wherein the controller (120) is arranged to respond to detecting damage in the sample window assembly via one or both of the following:
display an indication of the detected damage via a user interface of the XRF analyzer instrument,
transmit, to another apparatus, a message that indicates the detected damage.

15. A method (200) for monitoring integrity of a measurement chamber assembly (100) of an X-ray fluorescence, XRF, analyzer instrument that is applicable for analysis of elemental composition of a sample (130), where the measurement chamber assembly (100) comprises a measurement chamber (101) formed in a cavity provided in a casing of the XRF analyzer instrument, wherein the cavity is provided with a measurement aperture which allows for transferring primary radiation from the measurement chamber (101) towards the sample (130) positioned on exterior of the measurement chamber (101) and for transferring secondary radiation invoked in the sample (130) to the measurement chamber (101), and a sample window assembly arranged to close the measurement aperture, wherein the sample window assembly comprises an electrically conductive layer, the method (200) comprising:
supplying (202) an electric current through the electrically conductive layer;
providing (204) one or more electrical monitoring signals that are at least indirectly indicative of resistance of the electrically conductive layer; and
detecting (206) damage of the sample window assembly based on a change in resistance of the conductive layer indicated by the one or more electrical monitoring signals.
